# EUROPÄISCHE PATENTSCHRIFT

(11) **EP 4 089 302 B1**
(45) Veröffentlichungstag und Bekanntmachung des Hinweises auf die Patenterteilung: **31.01.2024**
(21) Anmeldenummer: 22169637.0
(22) Anmeldetag: 25.04.2022
(51) Int. Cl.: F16H 61/4017, F16H 61/431, F16H 61/47, F04B 49/00

(54) **VERFAHREN ZUR UNTERSTÜTZUNG DES GANGEINLEGENS VON STILLSTANDSSCHALTGETRIEBEN**
METHOD FOR SUPPORTING THE ENGAGEMENT OF A DWELL MECHANISM
PROCÉDÉ D'AIDE À L'ENCLENCHEMENT DE VITESSE DES BOÎTES DE VITESSES À L'ARRÊT

(30) Priorität: 11.05.2021 DE 102021204772
(43) Veröffentlichungstag der Anmeldung: 16.11.2022
(73) Patentinhaber: Robert Bosch GmbH, 70442 Stuttgart (DE)
(72) Erfinder: Klyne, Andreas, 89081 Ulm (DE); Vogel, Dieter, 89160 Dornstadt (DE); Mueller, Matthias, 89129 Langenau (DE)

(56) Entgegenhaltungen:
- DE-A1-102009 053 031
- DE-A1-102011 055 178
- DE-A1-102015 215 013
- DE-A1-102018 210 720
- US-A1- 2014 041 471

## Beschreibung

### TECHNISCHER BEREICH

Die Erfindung betrifft ein Verfahren zur Unterstützung des Gangeinlegens von einem Stillstandsschaltgetriebe eines Fahrantriebes, der eine Hydropumpe und einen Hydromotor umfasst.

### STAND DER TECHNIK

Es sind hydrostatische Fahrantriebe für mobile Arbeitsmaschinen bekannt, bei denen eine Hydropumpe und ein oder mehrere Hydromotoren in einem geschlossenen hydraulischen Kreis miteinander verbunden sind. Die Hydropumpe wird von einem Verbrennungsmotor - z.B. einem Dieselmotor - angetrieben, und die Hydromotoren treiben schließlich die mobile Arbeitsmaschine - z.B. über ein jeweiliges Rad - an.

Die Hydropumpe derartiger Fahrantriebe ist in ihrem Fördervolumen verstellbar. Damit kann z. B. bei konstanter Drehzahl des Verbrennungsmotors der von der Hydropumpe geförderte Volumenstrom im geschlossenen Kreis verändert werden und damit eine Abtriebsdrehzahl der Hydromotoren bzw. der Räder - also eine Fahrgeschwindigkeit der mobilen Arbeitsmaschine - verstellt werden.

Weiterhin ist es bekannt, dass auch der oder die Hydromotoren in ihrem Schluckvolumen verstellbar sind. Damit ist es z.B. möglich beim Anfahren der betroffenen mobilen Arbeitsmaschine zunächst das Fördervolumen der Hydropumpe von Null ausgehend bis zum Maximalwert zu erhöhen, um dann für schnellere Fahrt das Schluckvolumen der Hydromotoren vom Maximum ausgehend zu reduzieren. Mit dieser Reduktion wird die Abtriebsdrehzahl bei gleichbleibendem Volumenstrom erhöht.

Fahrantriebe von Baumaschinen sind häufig neben einem hydrostatischen Getriebe mit Stillstandsgetrieben ausgerüstet um eine höhere Übersetzungsspreizung zu ermöglichen. Das Schalten des Ganges erfolgt dabei im Stillstand mittels einer elektrohydraulischen Aktuierung.

Die Schaltanforderung erfolgt durch den Fahrer und wird nur unter bestimmten Bedingungen zugelassen. Je nach Position der Getriebepaarungen kann das Einlegen des Ganges allerdings scheitern. Ein Beispiel davon ist in DE 10 2009 053 031 A1 offenbart.

Um dieses Problem zu umgehen sind Lösungen bekannt, die automatisiert mittels der Hydrostatenansteuerung eine leichte Drehbewegung am Getriebeeingang erzeugen und damit die Blockierende Position im Getriebe lösen.

Bei dieser bekannten Form der Unterstützung kann allerdings nicht sichergestellt werden, dass ein bestimmtes Moment beim Gangeinlegen nicht überschritten wird. Dies ist allerdings die typische Anforderung von Getriebeherstellern.

Dem gegenüber liegt der Erfindung die Aufgabe zu Grunde, ein Verfahren herzustellen, dass die oben gelisteten Nachteile überwinden wird.

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:
Figur 1 zeigt schematisch einen Schaltplan eines Fahrantriebs gemäß dem Stand der Technik;
Figur 2 zeigt schematisch ein Beispiel eines Zeitverlaufes von verscheidenden Größen während dem Umschalten gemäß einer Ausführungsform der vorliegenden Erfindung.

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

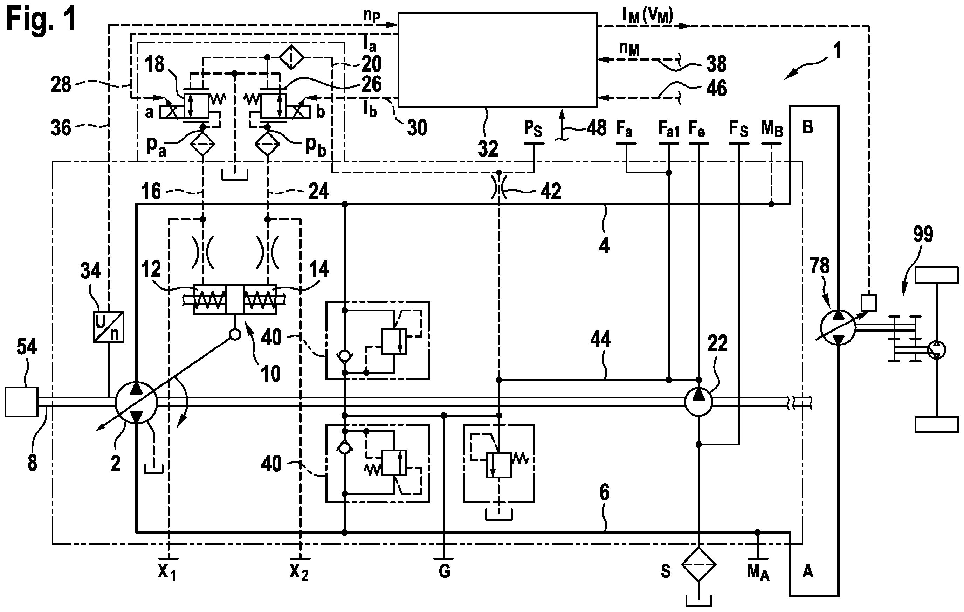

Gemäß Figur 1 hat ein hydrostatischer Fahrantrieb 1 eine Hydropumpe 2, die in geschlossenem hydraulischem Kreislauf über die Arbeitsleitungen 4 und 6 mit einem Hydromotor 78 zu dessen Druckmittelversorgung fluidisch verbunden ist. Dabei ist die Hydropumpe 2 mit einer Antriebsmaschine 54 über eine Triebwelle 8 zur Übertragung eines Drehmoments gekoppelt. Die Kopplung ist dabei nicht übersetzt, so dass die Drehzahl der Antriebsmaschine und der Hydropumpe 2 identisch sind.

Die Hydropumpe 2 ist als Axialkolbenpumpe in Schrägscheibenbauweise ausgestaltet und kann in beiden Drehrichtungen und sowohl im Pumpen- als auch im Motorbetrieb betrieben werden. Sie hat ein verstellbares Verdrängungsvolumen V_{P} und eine als doppelt wirkender Hydrozylinder ausgestaltete Verstelleinrichtung 10.

Der Hydrozylinder 10 hat eine erste Zylinderkammer 12 und eine der ersten entgegenwirkende, zweite Zylinderkammer 14. Die erste Zylinderkammer 12 ist über eine erste Stelldruckleitung 16 mit dem Ausgang eines ersten Druckreduzierventils 18 verbunden. Letztgenanntes ist an eine Steuerdruckleitung 20 angeschlossen, die über einen Steuerdruckanschluss pₛ und über eine Speisepumpe 22, die auf der gleichen Triebwelle 8, wie die Hydropumpe 2 sitzt, mit Steuerdruckmittel versorgbar ist.

In gleicher Weise ist die zweite Zylinderkammer 14 über eine zweite Stelldruckleitung 24 mit einem zweiten Druckreduzierventil 26 verbunden, welches an die Steuerdruckleitung 20 angeschlossen ist.

Die Druckreduzierventile 18, 26 sind elektromagnetisch betätigbar, wobei der jeweils in der Stelldruckleitung 16 bzw. 24 resultierende Stelldruck pₐ bzw. p_{b} gemäß einer Ventilkennlinie proportional zu einem Ansteuerstrom lₐ bzw. l_{b} des Elektromagnets a bzw. b ist. Über die elektromagnetische Betätigung der Druckreduzierventile 18, 26 können somit über die Vorgabe der Ansteuerströme lₐ, l_{b} die Stelldrücke pₐ, p_{b} der Zylinderkammern 12, 14 gesteuert werden. Zu diesem Zweck sind die Elektromagnete a, b der Druckreduzierventile 18, 26 über eine jeweilige Signalleitung 28 bzw. 30 mit einer elektronischen Steuereinheit 32 signalverbunden.

Des Weiteren hat der hydrostatische Fahrantrieb 1 eine Drehzahlerfassungseinheit 34, über die eine Drehzahl n_{P} der Hydropumpe 2 erfassbar und über eine Signalleitung 36 an die elektronische Steuereinheit 32 übermittelbar ist. Ebenso hat der Fahrantrieb 1 eine Drehzahlerfassungseinheit (nicht dargestellt), über die die Drehzahl n_{M} des Hydromotors erfassbar und über die Signalleitung 38 an die elektronische Steuereinheit 32 übermittelbar ist.

Zur sicherheitsrelevanten Druckabsicherung der Arbeitsleitungen 4, 6 gegen Überlast hat der hydrostatische Fahrantrieb 1 jeweils ein Druckbegrenzungsventil 40, das mit der jeweiligen Arbeitsleitung 4, 6 verbunden ist. Beide Druckbegrenzungsventile 40 sind mit ihren Ausgängen an eine Speisedruckleitung 44 angeschlossen, die mit der Speisepumpe 22 verbunden ist. Die Speisedruckleitung 44 ist über eine Drossel 42 mit der Steuerdruckleitung 20 fluidisch verbunden. Im Falle des Ansprechens der Druckbegrenzungsventile wird somit Druckmittel in die Speisedruckleitung 44 entspannt, wodurch energetischen Verluste geringer sind, als wenn die Entspannung zum Tank T hin geschähe. Die Druckbegrenzungsventile 40 weisen jeweils eine Speise- oder Nachsaugfunktion in Form eines Rückschlagventils auf.

Der hydrostatische Fahrantrieb 1 kann sowohl im Zugbetrieb als auch im Schlepp- oder Bremsbetrieb betrieben werden. Im Zugbetrieb arbeitet die Hydropumpe 2 im Pumpenbetrieb, im Bremsbetrieb arbeitet sie im Motorbetrieb. Zudem ist die Hydropumpe 2 reversierbar, das heißt ihr Verdrängungsvolumen V_{P} ist über die Verstelleinrichtung 10 beidseitig einer Neutralstellung mit Nullvolumen V_{P} = 0 verstellbar. Dadurch ist bei gleichbleibender Drehrichtung der Triebwelle 8 und der Antriebsmaschine (Dieselmotor) eine Fahrtrichtungsumkehr möglich.

Die elektronische Steuereinheit 32 ist über eine Signalleitung 46 mit einer Bedienerschnittstelle in Form eines Fahrpedals (nicht dargestellt) verbunden. Über das Fahrpedal wird dabei von einem Fahrer oder einer Fahrerin eine Geschwindigkeitsanforderung an die elektronische Steuereinheit 32 übermittelt. Diese kann sowohl die Rückwärtsfahrt als auch die Vorwärtsfahrt betreffen. Wird das Fahrpedal betätigt, so entspricht das dem Zug- oder Pumpenbetrieb der Hydropumpe 2, wird das Fahrpedal hingegen zurückgenommen, entspricht dies dem Brems- oder Motorbetrieb der Hydropumpe 2. Auch die Betätigung einer Fahrbremse (nicht dargestellt) entspricht dem Brems- oder Motorbetrieb der Hydropumpe 2. Die Steuereinheit ist derart ausgestaltet, dass sie anhand der genannten Betätigung den entsprechenden Betrieb ermitteln kann. Zur Auswahl einer Fahrtrichtung weist der hydrostatische Fahrantrieb 1 zudem einen betätigbaren Fahrtrichtungsschalter (nicht dargestellt) auf, der über eine Signalleitung 48 mit der elektronischen Steuereinheit 32 signalverbunden ist. In Abhängigkeit seiner Stellung erfolgt die Ansteuerung der Hydropumpe 2 in ihrem reversierten oder nicht reversierten Verstellbereich, also diesseits oder jenseits der Neutralstellung des Hubvolumens der Hydropumpe 2. Für die weitere Betrachtung seien folgende Fahrzustände definiert:
Vorwärtsfahrt, Zugbetrieb: Druckbeaufschlagung der ersten Zylinderkammer 12 über die erste Stelldruckleitung 16 und das erste Druckreduzierventil 18 mit dem erstem Stellruck pₐ durch Ansteuern des ersten Druckreduzierventils 18 mit dem Ansteuerstrom lₐ über die Steuereinheit 32 über die erste Signalleitung 28.

Vorwärtsfahrt, Bremsbetrieb: Druckbeaufschlagung der zweiten Zylinderkammer 14 über die zweite Stelldruckleitung 24 und das zweite Druckreduzierventil 26 mit dem zweiten Stelldruck p_{b} durch Ansteuern des zweiten Druckreduzierventils 26 mit dem Ansteuerstrom l_{b} über die Steuereinheit 32 über die Signalleitung 30.

Rückwärtsfahrt, Zugbetrieb: Druckbeaufschlagung der zweiten Zylinderkammer 14 über die Kette 24, 26, 30, 32.

Rückwärtsfahrt, Bremsbetrieb: Druckbeaufschlagung der ersten Zylinderkammer 12 über die Kette 16, 18, 28, 32.

In dem Ausführungsbeispiel ist die Hydropumpe 2 derart ausgestaltet, dass der Druck p, der in der hochdruckführenden der Arbeitsleitungen 4, 6 ansteht, dem dann wirksamen Stelldruck pₐ oder p_{b} entgegenwirkt und in Richtung seiner eigenen Verringerung wirksam ist. Hierzu weist die Hydropumpe 2 eine konstruktiv realisierte Regelschleife auf. Im vorliegenden Fall der als Axialkolbenpumpe in Schrägscheibenbauweise ausgestalteten Hydropumpe 2 ist dies so realisiert, dass eine Steuerscheibe der Hydropumpe 2 bezüglich einer Drehachse ihrer Zylindertrommel verdrillt angeordnet ist.

Mündungen derjenigen Zylinder, die mit der den Druck (Hochdruck) aufweisenden Druckniere Steuerscheibe verbunden sind, sind dadurch bezüglich einer Schwenkachse der Schrägscheibe unsymmetrisch verteilt angeordnet. Ebenso unsymmetrisch verteilt sind dann die an der Schrägscheibe abgestützten Endabschnitte der in den Zylindern geführten Arbeitskolben. Aus den somit unsymmetrisch wirkenden Stützkräften der Arbeitskolben resultiert an der Schrägscheibe ein im Pumpenbetrieb rückschwenkendes und im Motorbetrieb ausschwenkendes Moment. In der Konsequenz entsteht ein Zusammenhang in Form einer Pumpenkennlinie oder eines Kennfeldes von Pumpenkennlinien der Hydropumpe 2, in dem der jeweilige Stelldruck pₐ, p_{b} in Abhängigkeit des Drucks p und des Hubvolumens V_{P} der Hydropumpe 2, sowie von deren Drehzahl nₚ beschreibbar ist. Diese Kennlinien oder Kennfelder sind vermessen und in der elektronischen Steuereinheit 32 zur Verarbeitung, insbesondere zur Ausführung des später beschriebenen Verfahrens, abgelegt.

Weiterhin weist der Fahrantrieb ein Stillstandsschaltgetriebe 99 auf, das mindestens zwei Gänge umfasst, um die um höhere Übersetzungsspreizung zu ermöglichen. Das Schalten des Ganges erfolgt dabei im Stillstand mittels einer elektrohydraulischen Aktuierung (nicht dargestellt).

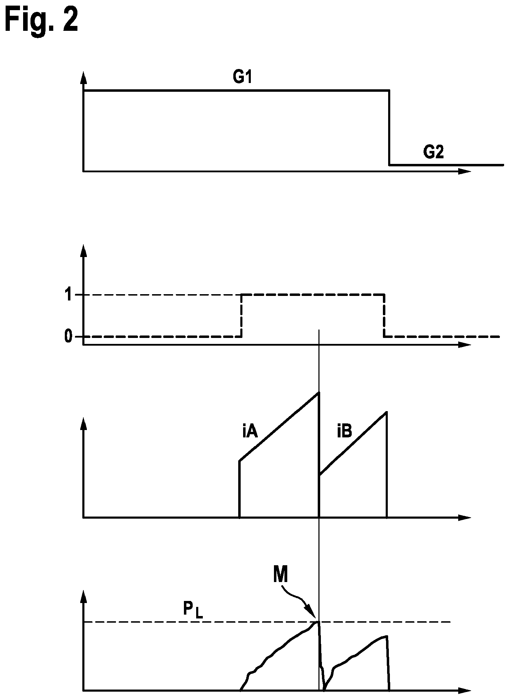

In den nächsten Abschnitten mit Hilfe von Figur 2 wird ein Verfahren zur Unterstützung des Gangeinlegens von dem Stillstandsschaltgetriebe 99 des Fahrantriebes 1 gemäß einer Ausführungsform der vorliegenden Erfindung beschrieben.

In dem oberen Abschnitt von Figur 2 ist der Gangsignal dargestellt. Mit G1 bedeutet, dass der erste Gang des Stillstandsschaltgetriebes 99 eingelegt ist und mit G2 bedeutet, dass der zweite Gang des Stillstandsschaltgetriebes 99eingelegt ist. In dem zweiten Abschnitt von Figur 2 ist die Freigabefunktion für das Gangeinlegen dargestellt. Wenn der Wert gleich 0 ist bedeutet, dass das Gangeinlegen nicht durchgeführt werden kann. Andersrum wenn der Wert gleich 1 ist bedeutet, dass das Gangeinlegen durchgeführt werden kann. In dem dritten Abschnitt sind die Ansteuerströme lₐ und l_{b} dargestellt, die während dem Gangeinlegen geregelt werden um das Gangeinlegen auszuführen. In dem unteren Abschnitt wird der durch die Hydropumpe 2 in einem der Arbeitsleitungen 4, 6 erzeugte Druck dargestellt.

Die Steuereinheit 32 ist konfiguriert einen Gangwechselbefehl zu erfassen und das Verfahren für den Gangwechsel zu starten.

Wenn die Steuereinheit den Gangwechselbefehl erfasst, wird die Steuereinheit 32 anfangen, den Schwenkwinkel der Hydropumpe 2 zu regeln, um das Gangeinlegen zu durchführen. In dem gezeigten Beispiel wird zuerst der Ansteuerstrom lₐ erhöht, um den Stelldruck pₐ in der ersten Zylinderkammer zu erhöhen und eine positive Steigung des Schwenkwinkels der Hydropumpe 2 zu verursachen.

Durch die Erhöhung des Schwenkwinkels wird sich der durch die Hydropumpe 2 erzeugte Druck erhöhen und der Moment an dem Hydromotor 78 wird damit steigen, damit die blockierende Position im Getriebe gelöst werden kann.

Der durch die Hydropumpe 2 erzeugte Druck wird bis zu einem vorgegebenen Wert P_{L} steigen dürfen. Es kann aber natürlich sein, dass die Position im Getriebe schon bei einem Druck niedriger als P_{L} gelöst wird, sodass das Gangeinlegen ausgeführt werden kann.

Wenn aber die Steuereinheit 32 erfasst, dass bei dem vorgegebenen Wert P_{L} das Gangeinlegen noch nicht ausgeführt wurde (wie bei dem Punkt M in Figur 2 gezeigt wurde), wird der Ansteuerstrom lₐ wieder auf 0 gebracht und die Steuereinheit 32 wird anfangen, den Schwenkwinkel der Hydropumpe 2 so zu regeln, dass eine negative Steigung des Schwenkwinkels der Hydropumpe 2 verursacht wird. In diesem Ausführungsbeispiel wird dieses Ziel mit einer Erhöhung des Ansteuerstromes l_{b} erreicht, um den Stelldruck p_{b} in der zweiten Zylinderkammer zu erhöhen und entsprechend eine negative Steigung des Schwenkwinkels der Hydropumpe 2 zu verursachen, was eine Steigung des Drucks in der Arbeitsleitung 6 verursacht.

Wie in dem unteren Abschnitt von Figur 2 zu sehen ist, wird in diesem Fall die blockierende Position im Getriebe bei einem Druck kleiner als P_{L} ausgelöst.

In diesem Ausführungsbeispiel ist der Wert von P_{L} gleich für positive und für negative Schwenkwinkel der Hydropumpe. Allerdings gemäß einem weiteren Ausführungsbeispiel kann dieser Wert auch unterschiedlich sein. Der Wert ist so ausgewählt, dass der Hydromotor 78 des Fahrantriebes 1, der mit diesem Druck P_{L} versorgt wird, keine Bewegung eines Fahrzeuges, auf dem der Fahrantrieb 1 installiert ist, verursacht.

Wenn die Steuereinheit 32 erfasst, dass das Gangeinlegen ausgeführt wurde, wird die Freigabefunktion wieder auf 0 gebracht.

Wie in Figur 2 indirekt dargestellt wurde, ist die Beeinflussung des Stelldrucks pₐ, p_{b} für die Regelung des von der Hydropumpe 2 erzeugten Druckes p in der ersten oder in der zweiten Zylinderammer 12, 14 mittels einer vorgegebenen Trajektorie ausgeführt. In der Tat zeigt Figur 2, dass die Ansteuerströme eine vorgegebene Trajektorie folgen, die deswegen eine vorgegebene Trajektorie für den von der Hydropumpe 2 erzeugten Druck p verursacht.

Die vorgegebene Trajektorie für die Stelldrücke pa, pb wird vorzugsweise so ausgewählt, dass der Steuerdruck am Anfang der Trajektorie keine Schwenkwinkeländerung des Schwenkwinkels der Hydropumpe 2 versursacht.

Während die vorliegende Erfindung unter Bezugnahme auf die oben beschriebenen Ausführungsformen beschrieben wurde, ist es für den Fachmann klar, dass es möglich ist, verschiedene Modifikationen, Variationen und Verbesserungen der vorliegenden Erfindung im Lichte der oben beschriebenen Lehre und innerhalb des Bereichs der beigefügten Ansprüche zu realisieren, ohne von dem Schutzbereich der Erfindung abzuweichen.

Insbesondere, auch wenn in dem gezeigten Beispiel eine Erhöhung des Ansteuerstromes eine Erhöhung des Stelldrucks verursacht, kann es auch umgekehrt sein.

Darüber hinaus wurden die Bereiche, auf denen Fachleute kundig sein dürften, hier nicht beschrieben, um die beschriebene Erfindung nicht unnötig zu verschleiern.

Dementsprechend soll die Erfindung nicht durch die spezifischen veranschaulichenden Ausführungsformen beschränkt sein, sondern nur durch den Schutzbereich der beigefügten Ansprüche.

## Patentansprüche

1. Verfahren zur Unterstützung des Gangeinlegens von einem Stillstandsschaltgetriebe (99) eines Fahrantriebes (1), wobei der Fahrantrieb mit der Hydropumpe (2), die mit einer Antriebsmaschine (54) gekoppelt ist, zur Druckmittelversorgung eines mit einem Abtrieb (80) gekoppelten Hydromotors (78) des Fahrantriebes (1) versehen ist, wobei die Hydropumpe (2) mittels einer ersten und einer zweiten Arbeitsleitung (4, 6) mit dem Hydromotor (78) verbunden ist, wobei die Hydropumpe (2) einen Stellzylinder (10) mit wenigstens einem ersten Zylinderraum (12, 14) und ein darüber verstellbares Hubvolumen (V_{P}) hat und wenigstens ein elektrisch ansteuerbares Druckventil (18, 26) vorgesehen ist, über das der Zylinderraum (12, 14) mit einem verstellend wirksamen Stelldruck (pₐ, p_{b}) beaufschlagbar ist, und mit einer Einrichtung (32), über die ein Druck (p) der Hydropumpe (2) in der ersten oder in der zweiten Arbeitsleitung (4, 6) mittels Beeinflussung des Stelldrucks (pₐ, p_{b}) regelbar ist, wobei das Stillstandsschaltgetriebe (99) einen ersten und einen zweiten Gang umfasst,
das Verfahren **dadurch gekennzeichnet, dass es** folgende Schritte umfasst:
a. Erfassung eines Gangwechselbefehls;
b. Beeinflussung des Stelldrucks (pₐ, p_{b}) in dem wenigstens einen ersten Zylinderraum (12, 14) sodass der Druck (p) der Hydropumpe (2) in einer zwischen der ersten und der zweiten Arbeitsleitung (4, 6) erhöht wird;
wobei die Beeinflussung des Stelldrucks (pa, pb) gestoppt wird, wenn der Druck (p) der Hydropumpe (2) in der einen Arbeitsleitung (4, 6) einen ersten vorgegebenen Wert erreicht hat.

2. Verfahren nach Anspruch 1, wobei der Stellzylinder (10) weiterhin mit einem zweiten dem ersten Zylinderraum entgegenwirkenden Zylinderraum (12, 14) vorgesehen ist, wobei wenn der Druck (p) der Hydropumpe (2) in der einen Arbeitsleitung (4, 6) den ersten vorgegebenen Wert erreicht hat und das Umschalten zwischen dem ersten und dem zweiten Gang noch nicht ausgeführt wurde, der Stelldruck (pa, pb) in dem zweiten Zylinderraum (12, 14) beeinflusst wird sodass der Druck (p) der Hydropumpe (2) in der anderen Arbeitsleitung (4, 6) erhöt wird, wobei die Beeinflussung des Stelldrucks (pa, pb) gestoppt wird, wenn der Druck (p) der Hydropumpe (2) in der anderen Arbeitsleitung (4, 6) einen zweiten vorgegebenen Wert erreicht hat.

3. Verfahren nach Anspruch 1 oder 2, wobei nachdem der erste vorgegebene Wert und vorzugsweise der zweite vorgegebene Wert erreicht wird, der Druck (p) der Hydropumpe (2) mittels Beeinflussung des Stelldrucks (pa, pb) gesenkt wird.

4. Verfahren nach einem der Ansprüche 1 bis 3, wobei der erste vorgegebene Wert und vorzugsweise der zweite vorgegebene Wert so ausgewählt werden, dass der Hydromotor (78) des Fahrantriebes (1) keine Bewegung eines Fahrzeuges, auf dem der Fahrantrieb (1) installiert ist, verursacht.

5. Verfahren nach einem der Ansprüche 1 bis 4, wobei die genannte Beeinflussung des Stelldrucks (pₐ, p_{b}) in dem einen Zylinderraum (12, 14) oder in dem anderen Zylinderraum (12, 14) mittels einer vorgegebenen Trajektorie für den von der Hydropumpe (2) erzeugten Druck (p) erfolgt.

6. Verfahren nach Anspruch 5, wobei die vorgegebene Trajektorie für den von der Hydropumpe (2) erzeugten Druck (p) mittels einer vorgegebenen Trajektorie des Stelldrucks (pa, pb) erfolgt.

7. Verfahren nach Anspruch 6, wobei die vorgegebene Trajektorie für den Stelldruck (pa, pb) so ausgewählt wird, dass der Steuerdruck am Anfang der Trajektorie keine Schwenkwinkeländerung des Schwenkwinkels der Hydropumpe (2) versursacht.

## Claims

1. Method for assisting in the gear engagement of a dwell mechanism (99) of a traction drive (1), wherein the traction device is provided with the hydraulic pump (2), which is coupled to a drive machine (54), for supplying pressure medium to a hydraulic motor (78), which is coupled to an output (80), of the traction drive (1), wherein the hydraulic pump (2) is connected to the hydraulic motor (78) by means of a first and a second working line (4, 6), wherein the hydraulic pump (2) has a control cylinder (10) with at least one first cylinder chamber (12, 14) and a swept volume (V_{P}) adjustable by means of the control cylinder, and at least one electrically actuable pressure valve (18, 26) is provided, by means of which the cylinder chamber (12, 14) can be charged with a control pressure (pₐ, p_{b}) which has an adjusting action, and having a device (32) by means of which a pressure (p) of the hydraulic pump (2) in the first or in the second working line (4, 6) can be regulated by way of influencing the control pressure (pₐ, p_{b}), wherein the dwell mechanism (99) comprises a first and a second gear,
the method being **characterized in that it** comprises the following steps:
a. detecting a gear change command;
b. influencing the control pressure (pₐ, p_{b}) in the at least one first cylinder chamber (12, 14) such that the pressure (p) of the hydraulic pump (2) in a between the first and the second working line (4, 6) is increased;
wherein influencing of the control pressure (pa, pb) is stopped when the pressure (p) of the hydraulic pump (2) in the one working line (4, 6) has reached a first predefined value.

2. Method according to Claim 1, wherein the control cylinder (10) is also provided with a second cylinder chamber (12, 14) that counteracts the first cylinder chamber, wherein, when the pressure (p) of the hydraulic pump (2) in the one working line (4, 6) has reached the first predefined value and the changeover between the first and the second gear has not yet been carried out, the control pressure (pa, pb) in the second cylinder chamber (12, 14) is influenced such that the pressure (p) of the hydraulic pump (2) in the other working line (4, 6) is increased, wherein the influencing of the control pressure (pa, pb) is stopped when the pressure (p) of the hydraulic pump (2) in the other working line (4, 6) has reached a second predefined value.

3. Method according to Claim 1 or 2, wherein, once the first predefined value and preferably the second predefined value are reached, the pressure (p) of the hydraulic pump (2) is lowered by way of influencing the control pressure (pa, pb).

4. Method according to one of Claims 1 to 3, wherein the first predefined value and preferably the second predefined value are selected such that the hydraulic motor (78) of the traction drive (1) does not cause any movement of a vehicle on which the traction drive (1) is installed.

5. Method according to one of Claims 1 to 4, wherein said influencing of the control pressure (pₐ, p_{b}) in the one cylinder chamber (12, 14) or in the other cylinder chamber (12, 14) is performed by means of a predefined trajectory for the pressure (p) generated by the hydraulic pump (2).

6. Method according to Claim 5, wherein the predefined trajectory for the pressure (p) generated by the hydraulic pump (2) is performed by means of a predefined trajectory of the control pressure (pa, pb).

7. Method according to Claim 6, wherein the predefined trajectory for the control pressure (pa, pb) is selected such that the control pressure at the start of the trajectory does not cause any change in the pivot angle of the hydraulic pump (2).

## Revendications

1. Procédé d'aide à l'enclenchement de vitesse d'une boîte de vitesses à l'arrêt (99) d'un système d'entraînement (1), dans lequel le système d'entraînement est pourvu de la pompe hydraulique (2), qui est couplée à une machine d'entraînement (54), pour l'alimentation en fluide sous pression d'un moteur hydraulique (78) couplée à une sortie (80) du système d'entraînement (1), dans lequel la pompe hydraulique (2) est reliée au moteur hydraulique (78) au moyen d'une première et d'une deuxième conduite de travail (4, 6), dans lequel la pompe hydraulique (2) présente un vérin de servocommande (10) comprenant au moins une première chambre de cylindre (12, 14) et une cylindrée (V_{P}) réglable par l'intermédiaire de celle-ci, et au moins une soupape de refoulement (18, 26) à commande électrique est prévue qui permet de soumettre la chambre de cylindre (12, 14) à une pression de réglage (pₐ, p_{b}) à effet de réglage, et comprenant un dispositif (32) par lequel une pression (p) de la pompe hydraulique (2) dans la première ou dans la deuxième conduite de travail (4, 6) peut être régulée au moyen d'une influence sur la pression de réglage (pₐ, p_{b}), dans lequel la boîte de vitesses à l'arrêt (99) comprend une première et une deuxième vitesse,
le procédé étant **caractérisé en ce qu'**il comprend les étapes suivantes consistant à :
a) détecter une commande de changement de vitesse ;
b) influencer la pression de réglage (pₐ, p_{b}) dans ladite au moins une première chambre de cylindre (12, 14) de sorte que la pression (p) de la pompe hydraulique (2) est augmentée dans une entre la première et la deuxième conduite de travail (4, 6) ;
dans lequel l'influence sur la pression de réglage (pₐ, p_{b}) est arrêtée lorsque la pression (p) de la pompe hydraulique (2) dans ladite une conduite de travail (4, 6) a atteint une première valeur prédéfinie.

2. Procédé selon la revendication 1, dans lequel le vérin de servocommande (10) est en outre pourvu d'une deuxième chambre de cylindre (12, 14) opposée à la première chambre de cylindre, dans lequel, lorsque la pression (p) de la pompe hydraulique (2) dans ladite une conduite de travail (4, 6) a atteint la première valeur prédéfinie et la commutation entre la première et la deuxième vitesse n'a pas encore été effectuée, la pression de réglage (pₐ, p_{b}) dans la deuxième chambre de cylindre (12, 14) est influencée de sorte que la pression (p) de la pompe hydraulique (2) dans l'autre conduite de travail (4, 6) est augmentée, dans lequel l'influence sur la pression de réglage (pₐ, p_{b}) est arrêtée lorsque la pression (p) de la pompe hydraulique (2) dans l'autre conduite de travail (4, 6) a atteint une deuxième valeur prédéfinie.

3. Procédé selon la revendication 1 ou 2, dans lequel, après que la première valeur prédéfinie et de préférence la deuxième valeur prédéfinie ont été atteintes, la pression (p) de la pompe hydraulique (2) est baissée au moyen d'une influence sur la pression de réglage (pₐ, p_{b}) .

4. Procédé selon l'une quelconque des revendications 1 à 3, dans lequel la première valeur prédéfinie et de préférence la deuxième valeur prédéfinie sont sélectionnées de telle sorte que le moteur hydraulique (78) du système d'entraînement (1) ne provoque aucun mouvement d'un véhicule sur lequel est installé le système d'entraînement (1).

5. Procédé selon l'une quelconque des revendications 1 à 4, dans lequel ladite influence sur la pression de réglage (pₐ, p_{b}) est effectuée dans ladite une chambre de cylindre (12, 14) ou dans l'autre chambre de cylindre (12, 14) au moyen d'une trajectoire prédéfinie pour la pression (p) produite par la pompe hydraulique (2).

6. Procédé selon la revendication 5, dans lequel la trajectoire prédéfinie pour la pression (p) produite par la pompe hydraulique (2) est effectuée au moyen d'une trajectoire prédéfinie de la pression de réglage (pₐ, p_{b}) .

7. Procédé selon la revendication 6, dans lequel la trajectoire prédéfinie pour la pression de réglage (pₐ, p_{b}) est sélectionnée de telle sorte que la pression de commande au début de la trajectoire ne provoque aucune modification d'angle de pivotement d'un angle de pivotement de la pompe hydraulique (2).
